Europäisches Patentamt

European Patent Office

Office européen des brevets

(11) Numéro de publication: **0 227 534 B1**

## (12) FASCICULE DE BREVET EUROPEEN

(45) Date de publication de fascicule du brevet: **26.02.92**

(21) Numéro de dépôt: **86402663.8**

(22) Date de dépôt: **02.12.86**

(51) Int. Cl.⁵: **F16L 27/04**, F16L 27/10, B63B 35/44, F16F 15/02, F16C 11/06, E21B 19/00, E21B 17/08

(54) **Support élastique à rotule.**

(30) Priorité: **11.12.85 FR 8518569**

(43) Date de publication de la demande: **01.07.87 Bulletin 87/27**

(45) Mention de la délivrance du brevet: **26.02.92 Bulletin 92/09**

(84) Etats contractants désignés: **DE ES GB IT NL SE**

(56) Documents cités:
FR-A- 1 094 549       FR-A- 2 097 833
FR-A- 2 350 246       GB-A- 2 107 815
US-A- 3 589 655       US-A- 3 984 990

(73) Titulaire: **INSTITUT FRANCAIS DU PETROLE 4, Avenue de Bois Préau F-92502 Rueil-Malmaison(FR)**

(72) Inventeur: **Delamare, Guy-Robert Les Iris 50, quai du Génie F-95220 Herblay(FR)**

Rank Xerox (UK) Business Services

## Description

La présente invention concerne un support élastique à rotule qui, lorsqu'il est interposé entre une charge mobile et une structure supportant cette charge, permet à la fois une absorption d'énergie au moment de la pose de la charge et une liberté de mouvement en nutation de la charge par rapport à la structure-support de la charge.

D'une façon générale, le support élastique à rotule, objet de la présente invention, s'applique au support et à la manutention de charges lourdes qui doivent rester mobiles en nutation par rapport à leur structure-support. Il est plus particulièrement adapté à des utilisations sur des navires ou des plate-formes flottantes en mer, pour suspendre des charges pendulaires, par exemple, ou des équipements connectés au fond de la mer, alors que la structure-support est soumise aux mouvements de la houle.

On connait déjà des structures-support permettant une liberté de mouvement en nutation de la charge, tels que des patins à rotule, à contact glissant entre deux surfaces sphériques, ou tels que des butées sphériques en lamifiés caoutchouc et métal.

Des butées sphériques en lamifiés de ce type sont décrites, par exemple, dans les brevets Français 2.486.621 et 2.370.900.

Cette liberté de mouvement est obtenue dans ce cas au prix d'une grande raideur angulaire du système, résultant, soit d'un coefficient de frottement difficile à réduire, soit de la rigidité en cisaillement des plaques en élastomère qui doivent présenter une surface suffisante pour supporter de lourdes charges.

Ces systèmes ne permettent pas, en outre, de réaliser une absorption d'énergie au moment de la dépose de la charge.

Il existe un système plus perfectionné, décrit par exemple dans le brevet US-3.984.990, qui résulte de l'association d'une rotule avec une série de vérins disposés sur un cercle concentrique à la rotule et dont les chambres sont mises en intercommunication par une tuyauterie de liaison.

Un tel système permet l'absorption d'énergie au moment de la dépose de la charge, mais présente l'inconvénient de nécessiter un grand nombre de pièces mécaniques précises, sensibles à l'usure et à la corrosion et nécessitant une maintenance constante. Il requiert, pour supporter de lourdes charges, la mise en oeuvre de pressions hydrauliques très élevées et, assurant la transmission des charges de façon ponctuelle, produit de fortes concentrations locales d'efforts au droit des attaches de vérins.

Le système décrit dans le brevet FR-A-2.097.833 concerne un joint universel utilisant un palier à fluide. Il repose sur l'utilisation d'une membrane supportant un fluide qui est disposée entre deux parties relativement mobiles.

Un tel système ne permet pas de centrer les deux éléments constituant l'articulation et autorise un déplacement radial de l'un des plateaux par rapport à l'autre.

Par contre, le dispositif selon l'invention permet la reprise de charges lourdes sur une grande surface avec une pression de fluide relativement basse, la majeure partie de ses composants, réalisés en matériaux souples, sont insensibles à la corrosion, à l'usure et à la fatigue et ne nécessitent aucun entretien.

Le dispositif selon la présente invention se comporte sensiblement, d'une part, comme une articulation à rotule et, d'autre part, comme un vérin amortisseur, les deux fonctions étant réunies dans le même organe. Le dispositif selon l'invention permet de plus un bon centrage des éléments ou plateaux de l'articulation.

La présente invention fournit notamment un support élastique à rotule composé de deux plateaux mobiles l'un par rapport à l'autre et reliés entre eux par au moins une rotule, caractérisé en ce que la transmission d'une charge entre lesdits plateaux est réalisée, pour une part, par l'intermédiaire d'au moins un coussin constitué d'au moins une enveloppe étanche confinant au moins un fluide qui se trouve mis en pression par l'action de ladite charge, et, pour une autre part, par au moins une rotule de centrage desdits plateaux l'un par rapport à l'autre, ladite rotule permettant d'obtenir une mobilité restreinte des deux plateaux l'un par rapport à l'autre, ces plateaux pouvant se rapprocher ou s'éloigner l'un de l'autre et simultanément l'axe de l'un des plateaux pouvant décrire un mouvement de mutation par rapport au centre de la noix sphérique de ladite rotule.

Les caractéristiques et avantages de l'invention seront mieux compris à la lecture de la description qui va suivre d'exemples de réalisation, en se référant aux dessins annexés, dans lesquels :

- la figure 1 est une vue en coupe verticale selon son axe d'un support selon l'invention à coussin circulaire,
- la figure 2 est une vue en coupe verticale selon son axe d'une variante du support selon l'invention à coussin annulaire,
- la figure 2A est une vue en coupe verticale selon son axe de cette même variante en position inclinée,
- la figure 3 est une vue en coupe horizontale perpendiculaire à son axe d'une autre variante du support selon l'invention à coussins multiples séparés et intercommunicants,
- la figure 4 est une vue en coupe verticale selon son axe d'une autre variante du support selon l'invention comportant un plateau intermédiaire,

- la figure 5 est une vue en coupe selon son axe vertical d'une autre variante du support selon l'invention, comportant deux rotules de centrage,
- la figure 6 est une vue en coupe verticale selon l'axe d'un support annulaire selon l'invention, représentant un détail de réalisation du coussin de fluide représenté à la figure 2,
- la figure 7 est une vue partielle en coupe verticale selon son axe d'une autre variante du support selon l'invention où les différentes enveloppes constituant le coussin sont indépendantes et possèdent des moyens amortisseurs intégrés,
- la figure 8 est une vue en coupe transversale selon son axe d'une autre variante du support selon l'invention où les enveloppes et les membranes qui constituent les coussins ont la forme d'un anneau ouvert,
- la figure 9 est une vue en coupe verticale selon son axe d'une autre variante du support selon l'invention où les membranes qui séparent les différentes enveloppes du coussin ont une forme conique,
- la figure 10 est une vue en coupe transversale d'un navire comportant un support selon l'invention utilisé pour suspendre une colonne montante de forage du sous-sol marin,
- la figure 11 est une vue en coupe selon son axe vertical d'une variante du support selon l'invention permettant le confinement central d'un conduit de fluide sous pression,
- la figure 12 est une vue en coupe verticale selon son axe d'une colonne oscillante comportant une variante du support selon l'invention servant à prendre appui sur le fond de la mer,
- la figure 13 est une vue en coupe verticale selon son axe d'une colonne oscillante multiarticulée comportant une variante du support selon l'invention, et
- la figure 14 représente, en coupe verticale selon son axe, un détail de réalisation agrandi de la base inférieure de la colonne, montrant plus particulièrement un support selon l'invention à deux coussins.

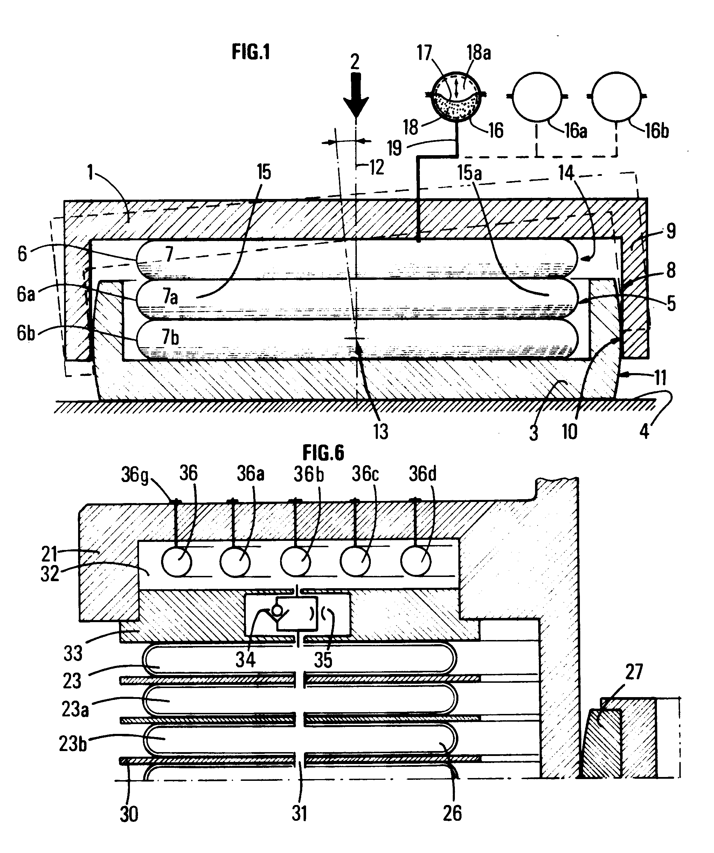

Sur la figure 1 on a représenté un premier mode de réalisation du support selon l'invention où le plateau supérieur 1, qui est par exemple celui qui reçoit la charge symbolisée par la flèche 2, est séparé du plateau inférieur 3, qui est par exemple celui prenant appui sur la structure portante 4, par l'intermédiaire d'un coussin 5, composé d'une pluralité d'enveloppes souples 6, 6a, 6b confinant des capacités 7, 7a, 7b de fluide que ladite charge 2 met en pression.

Les deux plateaux 1 et 3 du support sont maintenus en regard l'un de l'autre par la rotule 8 qui résulte, par exemple, de la coopération d'une virole 9, solidaire de 1 et comportant un alésage 10, avec une noix sphérique 11 solidaire de 3, centrée à l'intérieur de l'alésage 10.

Cette disposition permettant d'obtenir une mobilité restreinte des deux plateaux l'un par rapport à l'autre, ces plateaux pouvant se rapprocher ou s'éloigner l'un de l'autre et simultanément l'axe de l'un des plateaux pouvant décrire un mouvement de nutation par rapport au centre de la noix sphérique de ladite rotule.

Il est avantageux dans ce cas que le coussin 5 présente une forme circulaire dont l'axe 12 passe par le centre 13 de la rotule 8. Dans ce cas, les parois latérales telles que 14 des enveloppes 6, 6a, 6b prennent sous l'effet de la mise en pression du fluide des capacités 7, 7a, 7b une forme toroïdale dont le rayon de courbure de toutes les sections radiales verticales peut varier grâce à la souplesse en flexion du matériau qui les constitue, afin de permettre la liberté de mouvements relatifs des deux plateaux décrite précédemment.

Cependant, si les capacités 7, 7a, 7b contiennent un fluide sensiblement incompressible, tel que de l'eau, par exemple, dont le volume restera sensiblement constant quelle que soit la charge 2 appliquée sur le support, les deux plateaux 1 et 3 ne pourront pas se rapprocher l'un de l'autre, mais par contre ils pourront osciller l'un par rapport à l'autre.

Dans ce cas, le liquide contenu dans la zone du coussin, telle que 15, de rapprochement des deux plateaux sera chassé sans provoquer de résistance notable, vers la zone, telle que 15a, d'éloignement de ces deux plateaux. Le rayon de courbure des parois latérales toroïdales des enveloppes 6 6a, 6b diminuera dans la zone 15 alors qu'il augmentera dans la zone 15a.

Par contre, si les capacités 7, 7a, 7b contiennent un fluide compressible, tel que de l'air, ou un mélange de fluides compressibles et incompressibles dans des proportions appropriées, les deux plateaux 1 et 3 pourront se rapprocher sous l'effet d'une augmentation de la charge en produisant un accroissement de la pression dans les capacités 7, 7a, 7b et corrélativement une diminution du volume du gaz.

Si l'on dépose une charge animée d'une certaine vitesse, donc porteuse d'une certaine énergie cinétique, sur le plateau 1, celui-ci se rapprochera du plateau 2 jusqu'à ce que la pression du fluide des capacités 7, 7a, 7b se soit élevée à une valeur telle que la charge soit stoppée. Le rapprochement des deux plateaux produit une course d'amortissement de la charge et l'effort d'impact sera d'autant plus faible que cette course sera grande.

Dans la pratique, il est avantageux d'utiliser un fluide incompressible, tel que de l'eau, pour remplir les capacités 7, 7a, 7b et de leur associer au moins une capacité annexe, tel qu'un accumulateur oléopneumatique, par exemple, comme 16, 16a, 16b, dont la membrane 17 sépare la partie inférieure 18 en communication avec lesdites capacités par l'intermédiaire de la tuyauterie 19 et la partie supérieure 18a contenant un gaz, tel que de l'air ou de l'azote, dont la pression peut être ajustée à une valeur prédéterminée, cette pression de prétarage pouvant avantageusement être différente pour chacune desdites capacités 16, 16a, 16b, voire échelonnées de l'une à l'autre.

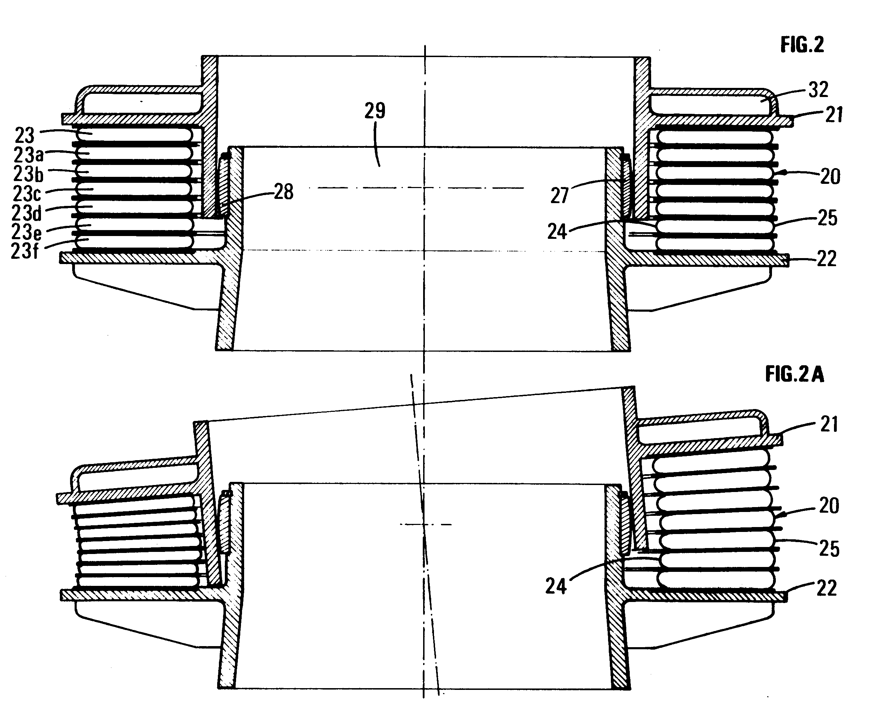

La figure 2 représente une première variante du support selon l'invention où le coussin 20 interposé entre les plateaux 21 et 22 est composé d'une superposition d'enveloppes annulaires 23 à 23f, dont les bordures intérieures 24 et extérieures 25 prennent une forme toroïdale sous l'effet de la mise en pression du fluide qu'elles confinent.

Les plateaux 21 et 22 sont centrés l'un par rapport à l'autre par la rotule 27 qui se trouve à l'intérieur du coussin 20 et donc, avantageusement, le centre de sa noix sphérique 28 se trouve sur l'axe des enveloppes annulaires 23 à 23f et dans un plan situé à mi-hauteur du coussin 20.

Dans ce cas, comme on le verra plus loin, il est avantageux que le plateau 22 possède en son centre un orifice circulaire 29, de sorte que la forme générale dudit support est annulaire et constitue un puits.

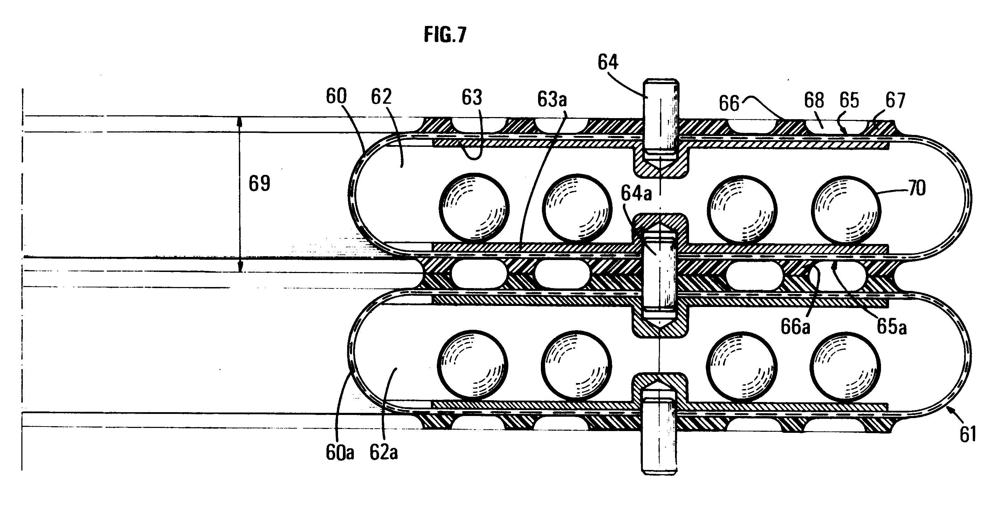

Comme il est représenté dans la figure 6 qui illustre le même support que la figure 2, mais de façon plus détaillée, les enveloppes 23 à 23f sont séparées par des plaques annulaires telles que 30, qui peuvent être percées d'orifices tels que 31, mettant en intercommunication les différentes capacités confinées par ces enveloppes.

A l'intérieur du plateau 21, on a ménagé une cavité 32 qui est remplie avec le même liquide incompressible que la capacité 26 du coussin 20, dont elle est séparée par la plaque annulaire 33 qui possède des orifices de communication symbolisés par 34 et 35.

Dans cette cavité se trouve logée au moins une manche souple aplatissable et étanche, telles que 36, 36a, 36b, 36c, fixée au plateau 21, par exemple par une valve de gonflage, telle que 36g. Cette manche souple est gonflée avec un gaz, tel que de l'air ou de l'azote, à une pression constituant un tarage initial.

Sous l'effet d'un accroissement de la charge supportée par le support produisant un accroissement de la pression du liquide contenu dans les capacités 26 et 32, et entourant la manche souple, telle que 36, celle-ci s'aplatit, le volume du gaz qu'elle contient diminuant.

Ainsi, si l'on dépose sur le plateau 21 une charge animée d'une certaine vitesse, donc porteuse d'une certaine énergie cinétique, celui-ci se rapprochera du plateau 22 jusqu'à ce que la pression des fluides (liquide et gaz) se soit élevée à une valeur telle que la charge soit stoppée.

Au cours de ce mouvement de rapprochement des deux plateaux 21 et 22, le liquide contenu dans la capacité 26 sera chassé vers la cavité 32 au travers des orifices 34 et 35.

L'orifice 34 est un clapet anti-retour qui laisse un large passage de 26 vers 32 et interdit le retour de 32 vers 26, de sorte que celui-ci ne sera possible que par l'orifice 35 qui est un ajutage dont la petite section produit un freinage du débit de retour généré par l'élasticité des capacités de gaz sous pression contenues dans les manches souples et évite le rebond de la charge déposée sur le support.

Les différentes enveloppes, telles que 23, 23a, 23b, représentées sur la figure 6, sont fabriquées à partir d'au moins une nappe de câbles disposés suivant une direction sensiblement radiale et noyés dans une feuille d'un matériau souple et étanche avec lequel ils adhèrent. Chacune de ces enveloppes, telle que 23a, est reliée à une autre enveloppe du coussin 20 qui lui est contigué, telle que 23b, par l'intermédiaire d'une membrane en matériau rigide, telle que 30, sur laquelle elles sont fixées par collage.

Les câbles constituant ces enveloppes peuvent être avantageusement réalisés à partir de fils de polyamide, polyester, Kevlar, verre ou acier et le matériau souple constituant les feuilles d'enrobage de ces câbles, et qui assurent la cohésion de la paroi des enveloppes et son étanchéité peuvent être avantageusement un elastomère comme du néoprène, du nitrile, du butyl ou de la gomme naturelle de caoutchouc, ou bien une matière plastique thermoformable, comme par exemple du chlorure de polyvinyle ou du polyuréthane.

Avantageusement, les nappes de câbles précitées peuvent être tissées entre elles et réaliser un tissu enduit.

La figure 2A représente le même support que la figure 2, le plateau 21 étant incliné par rapport au plateau 22, ce qui provoque la déformation du coussin 20, de sorte que les rayons des sections radiales verticales des parois souples toroïdales intérieures 24 et extérieures 25 des enveloppes sont constamment variables le long de leur périmètre.

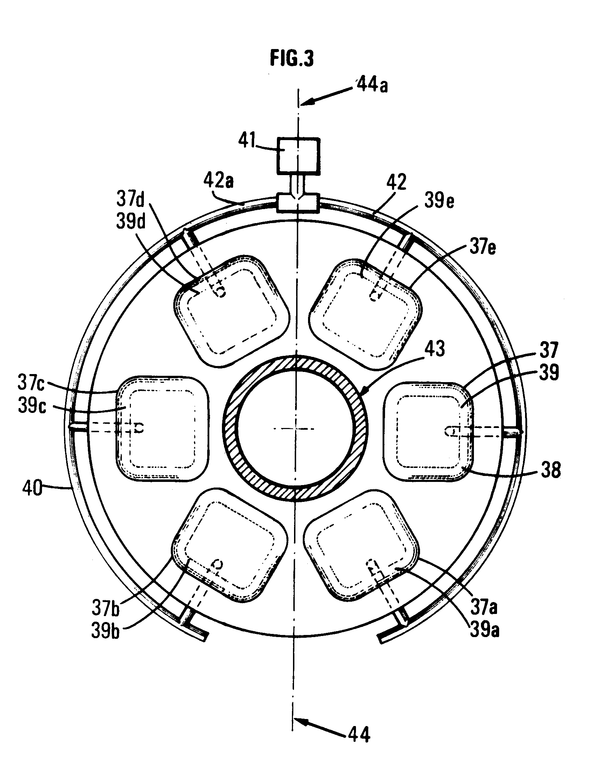

Sur la figure 3, on a représenté une deuxième variante du support élastique à rotule selon l'invention, comprenant une pluralité de coussins 37 à 37e composés d'une superposition d'enveloppes étanches et disposés côte à côte autour de la rotule 43 sur un cercle sensiblement concentrique à celle-ci. Chaque coussin élémentaire peut avantageusement présenter une forme rectangulaire, de sorte que la paroi souple, telle que 38, de chaque enveloppe qui le constitue prend une forme semicylindrique sous l'effet de la mise en pression du fluide qu'elle confine.

Les six capacités 39 à 39e délimitées par ces six groupes d'enveloppes formant les six coussins 37 à 37e, sont en intercommunication par l'intermédiaire de la tuyauterie 40 sur laquelle on a monté la vanne d'isolement 41.

A titre d'exemple, on a disposé ici cette vanne 41 à mi-longueur de la tuyauterie d'intercommunication 40 de telle sorte que les trois coussins 37e, 37 et 37a soient branchés sur le tronçon 42 de cette tuyauterie situé d'un même côté de la vanne et du plan de symétrie 44 du support, alors que les trois autres coussins 37b, 37c et 37d sont branchés sur le deuxième tronçon 42a situé de l'autre côté du plan 44.

On comprend aisément que le support puisse osciller librement autour d'un axe horizontal 44a contenu dans le plan 44 et passant par le centre de la rotule 43, si le liquide contenu dans les capacités 39e, 39 et 39a des coussins 37e, 37 et 37a dont la hauteur et le volume diminuent, peut être chassé vers les capacités 39b, 39c et 39d des coussins 37b, 37c et 37d dont la hauteur et le volume augmentent, en empruntant la canalisation 40, lorsque la vanne 41 est en position ouverte.

Lorsque celle-ci est en position fermée, aucun transfert de fluide n'est possible entre les coussins situés de part et d'autre du plan 44 et tout pivotement du support autour de l'axe 44a est impossible.

On peut ainsi contrôler la mobilité du support par le vannage d'un débit de fluide.

On conçoit qu'on puisse, en interposant sur la tuyauterie d'intercommunication des dispositifs connus de régulation de débit de fluide, tels que clapets de surpression tarés, distributeurs à tiroirs coulissants, vannes commandées par pressostat, etc ..., établir une programmation qui contrôlera la liberté de mouvement du support.

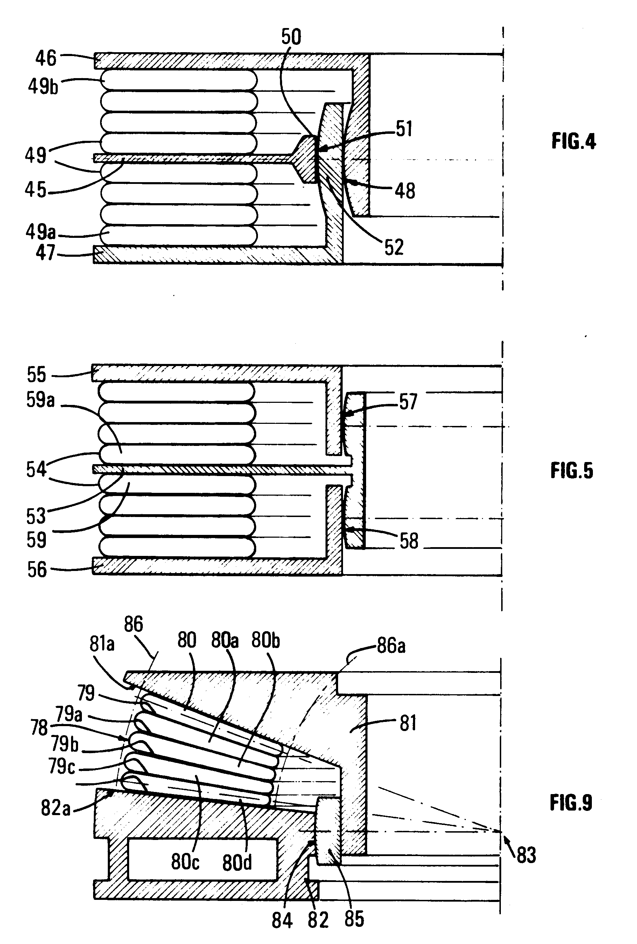

La figure 4 représente une troisième variante du support selon l'invention, où un plateau intermédiaire 45 est interposé entre les deux plateaux principaux 46 et 47 centrés entre eux par la rotule 48.

Ce plateau intermédiaire est séparé des plateaux principaux par les deux tronçons 49a et 49b du coussin 49 et centré par rapport au plateau 47 par une seconde rotule 50. Avantageusement, cette seconde rotule peut être réalisée par l'association d'un alésage 51 ménagé au centre du plateau 45 avec une noix sphérique 52 portée par le plateau 47.

Le plateau intermédiaire permet, lorsque les deux plateaux principaux 46 et 47 sont inclinés l'un par rapport à l'autre, de limiter la déformation transversale du coussin 49 en fournissant un ancrage stabilisant à mi-hauteur de celui-ci.

En effet, sous l'effet de l'inclinaison d'un plateau par rapport à l'autre, il apparait un déséquilibre dans le coussin, dû au fait que la pression uniforme du fluide qu'il contient s'exerce sur une plus grande surface du côté où sa hauteur s'accroit et sur une plus petite surface du côté opposé où elle diminue.

Il en résulte un cintrage du coussin qui sollicite fortement les parois des enveloppes qui le composent. Aussi, l'interposition d'un plateau intermédiaire tel que 45, permet de réaliser des coussins de plus grande épaisseur autorisant des débattements angulaires plus importants.

La figure 5 représente une quatrième variante du support selon l'invention qui comporte également un plateau intermédiaire 53 de stabilisation du coussin 54, mais ce plateau est centré par rapport aux deux plateaux principaux 55 et 56 par deux rotules 57 et 58. On commprend alors que lorsque les deux plateaux 55 et 56 sont inclinés l'un par rapport à l'autre, les deux enveloppes 59 et 59a, fixés sur ce plateau 53, lui transmettent les efforts transversaux dus à la déformation du coussin 54, ces efforts étant transmis ensuite aux deux plateaux principaux par les rotules 57 et 58.

La figure 7 représente un détail de réalisation d'une autre variante du support élastique selon l'invention où les différentes enveloppes, telles que 60 et 60a, du coussin 61 sont indépendantes les unes des autres, ne possèdent pas d'orifice d'intercommunication entre les capacités, telles que 62 et 62a, qu'elles confinent, mais dont chacune possède en revanche deux membranes en matériau rigide, telles que 63 et 63a.

Ces enveloppes sont simplement empilées les unes au dessus des autres, sans autre fixation que les pions de centrage 64 et 64a.

Les capacités, telles que 62 et 62a, sont étanches, remplies séparément d'un liquide incompressible et isolées les unes des autres.

Chaque enveloppe doit donc posséder des moyens propres d'amortissement d'une partie de la charge déposée avec une certaine vitesse sur le support élastique. Deux de ces moyens sont représentés sur la figure 7. Le premier consiste à équiper chacune de ses deux faces 65 et en contact avec les enveloppes qui lui sont contigues, comme 60a, d'une plaque d'appui 66 (ou 66a) en matériau souple et comportant des parties en saillie, telles que 67, et des parties concaves 68 ménageant, selon une répartition appropriée, des espaces libres entre les parties en saillie 67.

Le matériau souple constituant ces plaques sera avantageusement un élastomère, ou une autre matière plastique du même type que le matériau utilisé pour la fabrication des enveloppes. Il pourra adhérer à la paroi de ces enveloppes par le fait qu'il sera fabriqué, par un procédé thermique par exemple, à l'aide du même moule que celui servant à la confection de celle-ci.

On conçoit que, lors d'un accroissement de la charge supportée par le coussin 61, les parties en saillies 67 des plaques d'appui 66 (ou 66a) vont pouvoir s'écraser élastiquement en s'étalant latéralement pour occuper les espaces libres ménagés par les parties concaves 68. Ainsi, la hauteur 69 de chaque enveloppe pourra diminuer en générant une course d'amortissement du choc résultant de la pose d'une charge sur le support élastique.

Le second moyen propre d'amortissement représenté sur la figure 7 consiste à introduire à l'intérieur des capacités, telles que 62 ou 62a, qui contiennent un liquide incompressible, des sphères creuses et étanches, telles que 70, dont la paroi élastique présentera une géométrie variable en fonction de la pression dudit liquide qui les entoure.

Lorsque la pression de ce liquide augmente, sous l'action d'un accroissement de la charge supportée par le coussin 61, la paroi sphérique des bulles 70 va subir une contrainte de compression accrue et son périmètre va se contracter sous l'effet de cette contrainte.

Le diamètre des bulles va diminuer et corrélativement, le volume d'air qu'elles contiennent. Cette diminution de volume de l'ensemble des bulles 70 entrainant une diminution du volume des capacités telles que 62, la hauteur 69 de chacune des alvéoles, telles que 60, 60a va diminuer en générant une course d'amortissement du choc résultant de la pose d'une charge sur le support élastique.

Il est évident que, pour réaliser un support élastique selon l'invention, on peut utiliser l'un ou l'autre de ces moyens d'amortissement illustrés par la figure 7 ou bien les deux ensembles.

On peut également, en association ou non avec ces deux moyens précités, utiliser d'autres moyens, comme par exemple celui qui consiste à remplacer le liquide incompressible contenu dans les capacités 62, 62a par une substance déformable, à la limite de l'état solide, et présentant une certaine compressibilité, tel qu'un gel de silicone.

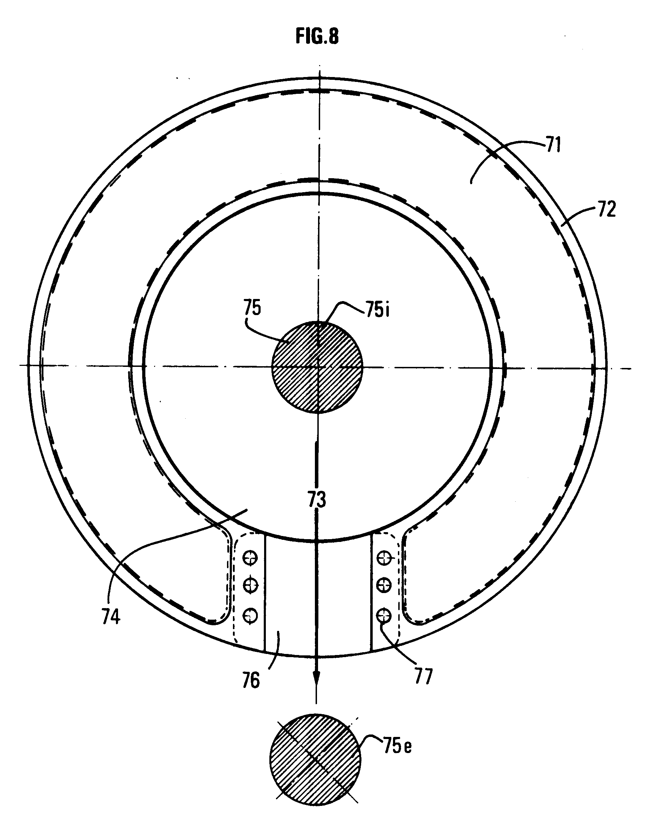

Sur la figure 8, on a représenté une autre variante du support élastique selon l'invention où les enveloppes souples annulaires telles que 71 et les membranes rigides annulaires telles que 72 composant le coussin dudit support ont une forme d'anneau ouvert qui ménage un passage temporaire, symbolisé par la flèche 73, entre le puits central 74 qu'elles entourent et l'extérieur.

Ce passage permet, par exemple, de sortir un matériel, comme le tube 75, installé dans le puits 74 en position 75i pour le placer en position 75e ou inversement d'évacuer le coussin en maintenant en place le tube 75. La continuité des membranes annulaires telles que 72 peut avantageusement être assurée par des éclisses démontables 76 qui verrouillent le passage 73 et sont solidarisées avec les deux extrémités de la membrane 72 à l'aide d'un moyen de fixation démontable, comme par exemple des boulons 77.

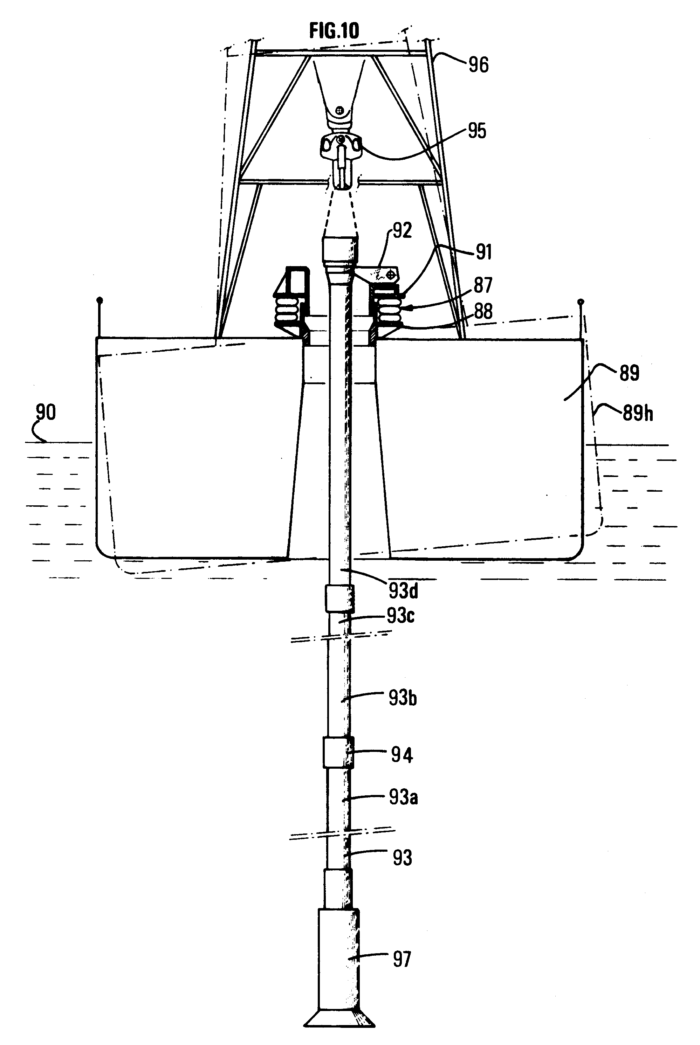

La figure 9 représente une autre variante du support élastique selon l'invention où, pour accroître la stabilité transversale du coussin 78, les membranes annulaires 79 à 79c qui séparent les enveloppes 80 à 80d ont une forme conique.

On voit dans ce cas, qu'il est avantageux que les surfaces 81a et 82a des plateaux supérieur 81 et inférieur 82 du support élastique qui reçoivent la fixation des enveloppes extrêmes 80 et 80d soient également coniques. Il est avantageux également que ces différentes surfaces coniques 81a, 79 à 79c et 82a aient un sommet commun 83 qui soit également le centre de la surface sphérique 84 de la rotule 85 qui centre les deux plateaux 81 et 82 l'un par rapport à l'autre. Ce sommet 83 peut aussi être le centre de deux sphères fictives 86 et 86a entre lesquelles le coussin 78 vient s'inscrire.

On voit que le dessin sera très peu modifié si les surfaces 81a, 79 à 79c et 82a, au lieu d'être coniques, ont par exemple une forme sphérique ou torique.

La figure 10 représente une installation marine qui constitue un des cas typique d'application du support élastique annulaire selon l'invention. Le support élastique 87 schématisé ici est fixé par l'intermédiaire de son plateau inférieur 88 sur un navire 89 utilisé par exemple pour le forage du sous-sol sous-marin, la surface de la mer étant symbolisée par la ligne 90.

Le plateau supérieur 91 du support 87 possède des chiens escamotables 92 sur lesquels on vient poser successivement les tronçons 93, 93a, 93b, 93c, etc... qui constituent l'ensemble d'un colonne montante de forage 94. En effet, la manutention d'une telle colonne, à l'aide d'un palan 95 porté par le derrick 96, et qui a pour but de descendre ou de remonter les équipements d'extrémité 97 destinés à être connectés sur le fond de la mer, s'effectue par adjonction ou par retrait de tronçons successifs tels que 93 à 93d.

Pendant le laps de temps nécessaire au raboutage d'un nouveau tronçon, ou à son retrait, la colonne 94 est portée par le support 87. La déformation du coussin fluide de ce support 87 permet un accomodement entre son plateau supérieur 91 solidaire provisoirement de la colonne précitée et son plateau inférieur 88 solidaire du navire. Cet accomodement autorise les mouvements d'oscillation du navire 89, qui peut pivoter sous l'action de la houle jusque dans la position 89h, par exemple, alors que la colonne 94 reste sensiblement verticale sous l'effet de sa stabilité pendulaire.

Lorsque l'on descend à une certaine vitesse la colonne 94 à l'aide du palan 95, après adjonction ou retrait d'un tronçon tel que 93d, pour la poser sur les chiens 92 du support 87, il se produit inévitablement un choc que le coussin dudit support absorbe comme nous l'avons vu précédemment par une diminution de sa hauteur et un accroissement temporaire de la pression du et des fluides qu'il confine.

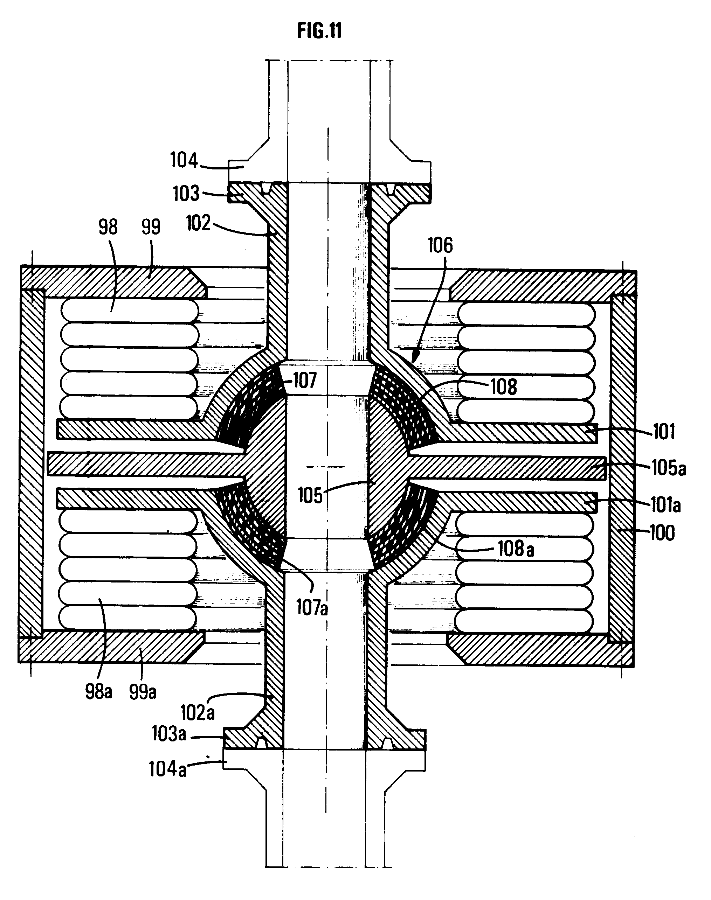

La figure 11 représente une variante du support élastique selon l'invention comportant deux coussins de fluide antagonistes 98 et 98a. Les deux plateaux extérieurs 99 et 99a sont reliés par une virole périphérique 100, alors que chacun des deux plateaux intérieurs 101 et 101a possède une cheminée intérieure 102 (ou 102a) terminée par une bride 103 (ou 103a) de raccordement avec, par exemple deux tronçons 104 et 104a, d'une colonne montante, non représentée, de transfert de la production de pétrole depuis un gisement situé au fond de la mer jusqu'à la surface.

Ces deux plateaux inférieurs sont centrés l'un par rapport à l'autre par une rotule 106. Avantageusement, cette rotule peut être réalisée à l'aide d'un anneau sphérique central 105 et de deux coquilles sphériques en élastomère 107 et 107a dont chacune adhère d'une part à cet anneau sphérique et d'autre part à une concavité sphérique 108 (ou 108a) ménagée sur chacun des plateaux intérieurs 101 et 101a.

On conçoit donc que cette installation permette l'oscillation des deux tronçons de colonne montante 104 et 104a l'un par rapport à l'autre selon un mouvement de nutation alors qu'un effort de tension est transmis de l'une à l'autre par mise en pression du fluide confiné dans les coussins 98 et 98a. La rotule 106 permet également ce mouvement d'oscillation grâce à la déformation en cisaillement de ses coquilles en elastomère 107 et 107a et remplit la double fonction de centrer entre eux les quatre plateaux 99, 99a, 101 et 101a du support notamment à l'aide de la collerette 105a, et d'assurer l'étanchéité nécessaire au transit d'un fluide sous pression entre les tronçons de colonne montante 104 et 104a. Avantageusement, dans le cas où la pression du fluide est très élevée, on peut renforcer les coquilles en élastomère 107 et 107a par interposition de coquilles rigides entre deux couches d'élastomère pour former un lamifié caoutchouc-métal.

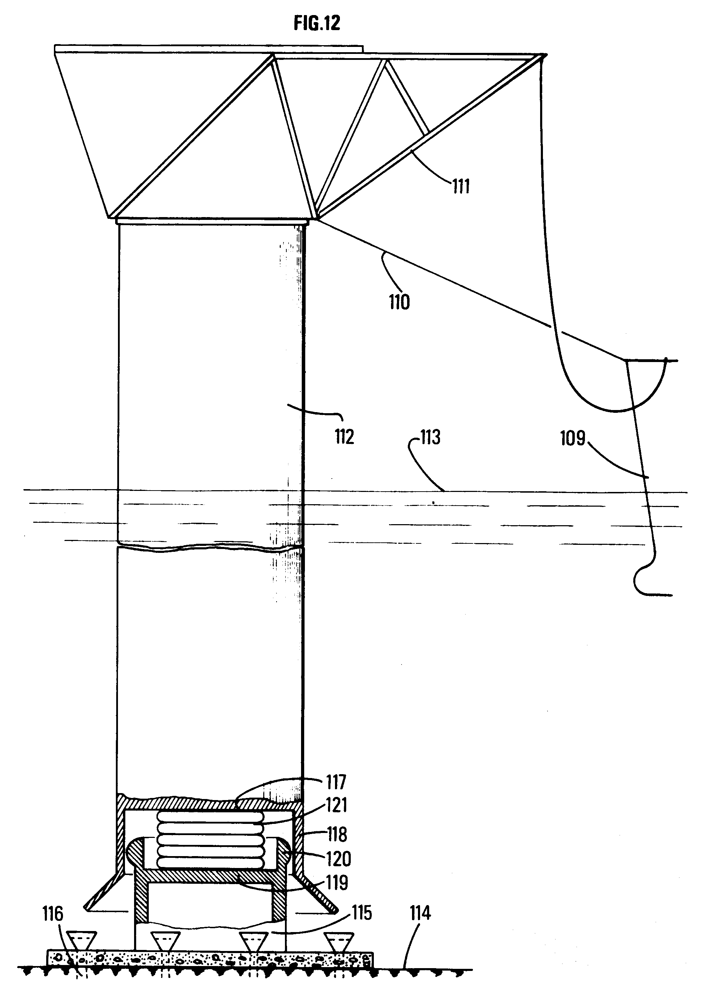

La figure 12 illustre un autre cas typique d'application du support élastique selon l'invention pour réaliser l'articulation située à la base d'une colonne oscillante d'amarrage d'un navire en mer 109.

Le navire est amarré à l'aide d'une aussière 110 sur la partie tournante 111 qui coiffe la colonne 112. Cette colonne émerge de la surface de la mer symbolisée par la ligne 113 et s'étend jusqu'à proximité du fond symbolisé par la ligne 114. Une embase sous-marine 115 est posée sur le fond et maintenue solidement ancrée, par exemple par des pieux foncés 116.

La colonne 112 est solidarisée avec cette embase par un système d'articulation tout à fait semblable au support élastique selon l'invention illustré par la figure 1 et qui comporte un plateau supérieur 117, équipé d'une virole 118, qui n'est autre que la base inférieure de la colonne, et un plateau inférieur 119, équipé d'une noix sphérique annulaire 120, qui fait partie de l'embase 115. La noix sphérique 120 est centrée à l'intérieur de la virole 118 de telle sorte que la colonne puisse osciller en fonction des mouvements de la mer, sa base étant retenue dans une position fixe sur le fond de la mer, cette position étant imposée par l'embase 115.

Dans ce cas d'application, la colonne 112 possède une flottabilité propre inférieure à sa masse, et elle prend appui sur le fond de la mer par l'intermédiaire du coussin circulaire 121 situé au centre de la rotule 120 entre les plateaux 117 et 119.

La charge d'appui de la colonne est supportée par la mise en pression du fluide contenu dans les différentes enveloppes de ce coussin.

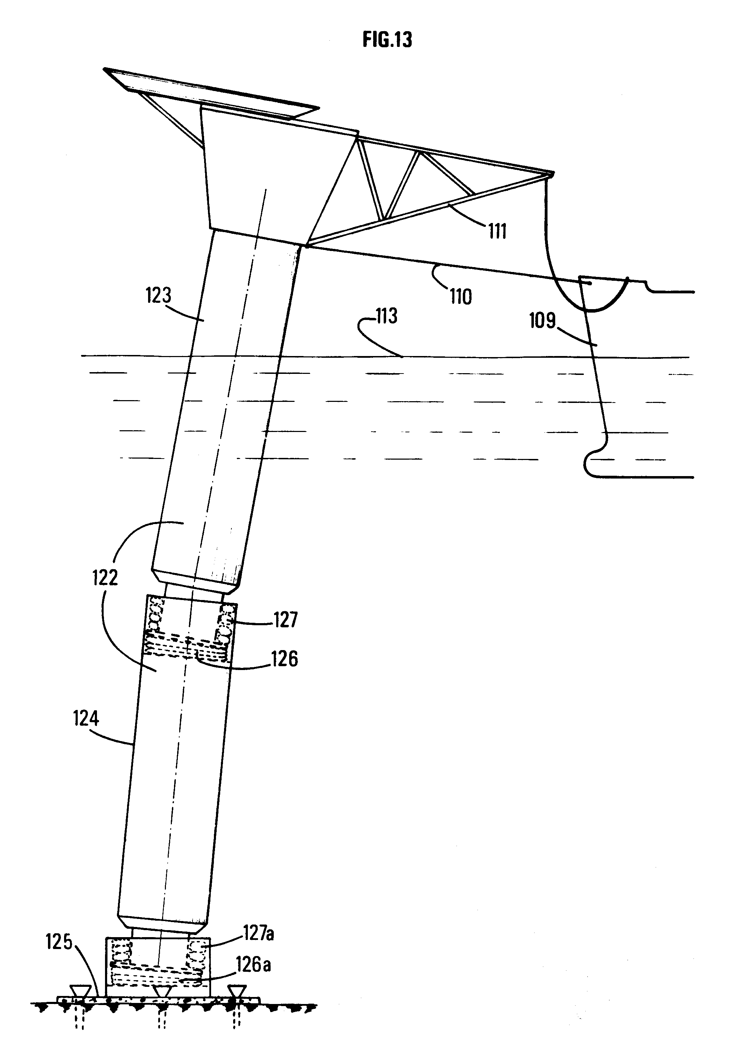

La figure 13 représente un cas particulier d'application du support élastique selon l'invention pour réaliser une colonne oscillante d'amarrage d'un navire en mer lorsque la profondeur d'eau est très grande, la colonne telle que 122 devant être alors, pour cette raison, réalisée en plusieurs tronçons, tels que 123 et 124, articulés entre eux et avec l'embase fixe 125 solidaire du fond de la mer.

La masse de cette colonne pouvant être dans certains cas, au moment de l'installation par exemple, supérieure à sa flottabilité, et dans d'autres cas, en utilisation par exemple, inférieure à sa flottabilité, l'articulation sera réalisée à l'aide d'un support selon l'invention comportant deux coussins antagonistes : un premier coussin circulaire 126 ou 126a destiné à supporter des charges vers le bas, et un second coussin de forme annulaire 127 ou 127a destiné à transmettre les tensions vers le haut.

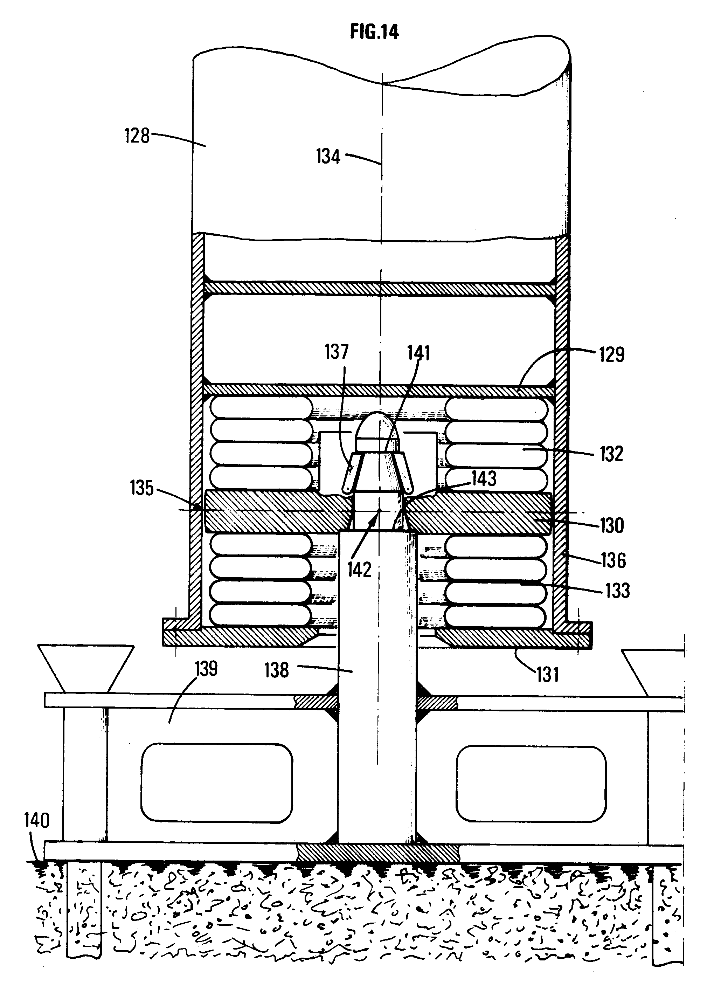

On comprendra mieux l'architecture de cette articulation en se référant à la figure 14 qui représente avec plus de détails une articulation de ce type où la colonne oscillante 128 est équipée à sa base de trois plateaux 129, 130 et 131 entre lesquels sont installés deux coussins de fluides annulaires selon l'invention 132 et 133.

Les plateaux 129 et 131 sont solidaires de la colonne, alors que le plateau 130, calé entre les deux coussins déformables 132 et 133, possède une liberté de mouvement en translation et en nutation par rapport à l'axe 134 de la colonne, grâce à la rotule 135 qui réalise un centrage par rapport à la virole 136 prolongeant vers le bas la structure de la colonne 128.

Ce plateau 130 possède également des moyens de connexion, comme par exemple des chiens escamotables 137, sur un doigt de centrage vertical 138 solidaire de l'embase 139 de liaison avec le fond de la mer, symbolisé par la ligne 140.

Le fonctionnement d'un tel dispositif est facile à comprendre. L'embase 139 étant préalablement installée sur le fond, la colonne 128 est acheminée en flottaison sur le site au-dessus du doigt de centrage 138 puis, alourdie par déballastage, elle descend.

Le doigt 138 dans lequel on a ménagé une gorge 141, pénètre à l'intérieur du connecteur porté par le plateau 130, et les chiens 137 se referment en pénétrant à l'intérieur de cette gorge.

La charge de la colonne alourdie, ainsi que le choc de la pose, sont transmis depuis le plateau 129 sur le coussin 132 et le plateau 130 qui s'appuie sur la collerette 143 du doigt 138.

Puis la colonne est allégée par le ballastage et sa flottabilité devient supérieure à sa masse, de sorte qu'une traction vers le haut est transmise depuis le plateau 131 sur le coussin 133 et le plateau 130.

Le plateau 130 transmet cette traction à l'embase 139 par l'intermédiaire des chiens 137 qui prennent appui à l'intérieur de la gorge 141 du doigt 138. En toutes configurations, la colonne 128 peut osciller en nutation autour du centre 142 de la rotule 135 grâce à la déformabilité des coussins de fluide 132 et 133.

Les avantages de la présente invention résultent de la possibilité de réaliser des supports élastiques à rotule capables de supporter des charges très élevées ou des structures de masse très importante, par exemple de plus de mille tonnes, sans entraver leur mobilité.

Elle permet plus spécialement de résoudre des problèmes d'installation en milieu marin de matériels et de structures soumis aux mouvements de la houle.

Elle présente également l'avantage de combiner dans un même organe une articulation à rotule et un vérin amortisseur de choc et de privilégier des moyens technologiques insensibles à la corrosion, à l'usure et à la fatigue.

Ses applications sont diverses et multiples. On peut l'utiliser, mais ce n'est qu'un exemple, comme moyen de suspension et de manutention d'une colonne montante de forage du sous-sol sous-marin ou de transfert de la production de pétrole vers la surface de la mer, ou comme articulation d'une structure marine fixée au fond de la mer, telle qu'une colonne oscillante d'amarrage d'un navire.

## Revendications

1. Support élastique à rotule composé de deux plateaux mobiles l'un par rapport à l'autre et reliés entre eux par au moins une rotule, la transmission d'une charge entre lesdits plateaux (1, 3) étant réalisée pour une part par l'intermédiaire d'au moins un coussin (5) constitué d'au moins une enveloppe étanche (6) confinant au moins un fluide qui se trouve mis en pression par l'action de ladite charge et pour une autre part, par au moins une rotule de centrage (8) desdits plateaux l'un par rapport à l'autre, ladite rotule permettant d'obtenir une mobilité restreinte des deux plateaux l'un par rapport à l'autre, ces plateaux pouvant se rapprocher ou s'éloigner l'un de l'autre et simultanément l'axe de l'un des plateaux pouvant décrire un mouvement de nutation par rapport au centre de la noix sphérique de ladite rotule.

2. Support élastique à rotule selon la revendication 1, caractérisé en ce que chacun desdits coussins (5) est composé d'une superposition d'enveloppes étanches (6 à 6b) de contour sensiblement circulaire dont les bordures périphériques prennent sous l'effet de la mise en pression du fluide qu'elles confinent une forme sensiblement toroïdale et en ce que la ou lesdites rotules (8) de centrage desdits plateaux (1, 3) l'un par rapport à l'autre sont disposées autour desdites enveloppes coaxialement à celles-ci.

3. Support élastique à rotule selon la revendication 1, caractérisé en ce que chacun desdits coussins (20) est composé d'au moins une enveloppe annulaire (23).

4. Support élastique à rotule selon la revendication 1, caractérisé en ce que chacun desdits coussins (20) est composé d'une superposition d'enveloppes annulaires (23 à 23f) dont les bordures intérieures (24) et extérieures (25) prennent, sous l'effet de la mise en pression du fluide qu'elles confinent, une forme sensiblement torique ou toroïdale et en ce que la ou lesdites rotules de centrage (27) desdits plateaux (21, 22) l'un par rapport à l'autre, d'une part sont disposées à l'intérieur desdites enveloppes et concentriquement à celle-ci et, d'autre part comportent en leur centre un orifice cylindrique (29) tel que ledit support présente une forme annulaire entourant ledit orifice central.

5. Support élastique à rotule selon la revendication 1, caractérisé en ce qu'une pluralité de coussins (37 à 37d), dont chacun est composé d'une superposition d'enveloppes étanches, sont disposés côte à côte sur un cercle concentrique à la ou lesdites rotules de centrage (43)desdits plateaux et reliés entre eux par au moins une canalisation (40) obturable par des moyens de vannage (41), de façon que les capacités de fluide (39 à 39d) confinées par tout ou partie desdits coussins multiples puissent être, soit en intercommunication, soit isolées temporairement les unes des autres.

6. Support élastique à rotule selon l'une des revendications 1 à 5, caractérisé en ce qu'au moins un plateau intermédiaire (45) est interposé entre les deux plateaux principaux (46, 47)dudit support et séparé de chacun de ceux-ci par au moins un desdits coussins (49), et en ce que ledit plateau intermédiaire est maintenu centré par rapport à l'un au moins des deux plateaux principaux (47) par l'intermédiaire d'au moins une rotule (50).

7. Support élastique à rotule selon l'une des revendications 1 à 5, caractérisé en ce que la ou les rotules de centrage (8) desdits plateaux (1, 3) l'un par rapport à l'autre est réalisée par l'association d'une virole (9) solidaire de l'un des deux plateaux et présentant un alésage cylindrique (10), avec une noix sphérique (11) solidaire de l'autre plateau et pouvant coulisser et pivoter à l'intérieur dudit alésage.

8. Support élastique à rotule selon l'une des revendications 4 à 7, caractérisé en ce que chacune desdites enveloppes (23 à 23f) constituant les coussins de fluide précités (20) est fabriquée à partir d'au moins une nappe de câbles disposés sensiblement radialement et noyés dans une feuille d'un matériau souple et étanche auquel adhèrent lesdits câbles, et en ce que chacune desdites enveloppes est reliée à une autre enveloppe desdits coussins qui lui est contiguë, par l'intermédiaire d'au moins une membrane annulaire (30) en matériau rigide à laquelle lesdites enveloppes sont fixées par collage, chacune desdites membranes annulaires situées à une extrémité dudit coussin possédant des moyens de fixation étanches auxdits plateaux principaux (21, 22) et intermédiaires (45) dudit support élastique.

9. Support élastique à rotule selon la revendication 8, caractérisé en ce que lesdites membranes annulaires (30) sont percées d'au moins un orifice d'intercommunication (31) entre les capacités des différentes enveloppes (23 à 23f) d'un même coussin (20).

10. Support élastique à rotule selon la revendication 8, caractérisé en ce que lesdites membranes annulaires en matériau rigide (30, 79 à 79c) qui séparent les enveloppes desdits coussins ont une forme de rondelle plate ou de virole tronconique, sphérique ou torique.

11. Support élastique à rotule selon la revendication 8, caractérisé en ce que lesdites enveloppes annulaires (71) et lesdites membranes annulaires (72) composant lesdits coussins ont une forme d'anneau ouvert qui ménage un passage temporaire (73) entre l'orifice central (74) qu'elles entourent et l'extérieur, la continuité desdites membranes étant assurée par des éclisses démontables (76) qui verrouillent ledit passage.

12. Support élastique à rotule selon l'une des revendications 1 à 6, caractérisé en ce que le fluide confiné par les enveloppes étanches desdits coussins est un liquide sensiblement incompressible.

13. Support élastique à rotule selon l'une des revendications 1 à 6, caractérisé en ce que le fluide confiné par les enveloppes étanches dudit coussin est au moins en partie une substance déformable à la limite de l'état solide et présentant une certaine compressibilité, tel qu'un gel de silicone.

14. Support élastique à rotule selon l'une des revendications 1 à 6, caractérisé en ce que le fluide confiné par les enveloppes étanches desdits coussins est un mélange dans des proportions appropriées d'un liquide sensiblement incompressible et d'un gaz compressible dont la compression permet le rapprochement des deux plateaux précités dudit support et l'absorption de l'énergie apportée par la dépose d'une charge.

15. Support élastique à rotule selon la revendication 14, caractérisé en ce qu'une canalisation (19) relie la capacité de liquide contenue dans les enveloppes étanches (6 à 6b) de chacun desdits coussins (5) à au moins une bouteille annexe ou accumulateur pneumatique (16) contenant un gaz compressible amené avant utilisation à un niveau de pression constituant un tarage initial.

**16.** Support élastique à rotule selon la revendication 14, caractérisé en ce que le gaz compressible occupant pour partie la capacité (16) des enveloppes étanches (23 à 23f) des coussins précités, ou une capacité annexe (32) communiquant avec ladite capacité des enveloppes, est confiné dans au moins une manche souple aplatissable et étanche (36) qui l'isole du liquide occupant l'autre partie de cette capacité, ledit gaz étant amené avant utilisation à une pression de tarage produisant le gonflement de ladite manche jusqu'à ce que, la pression dudit liquide étant devenue supérieure à ladite pression de tarage, cette dite manche tende à reprendre sa forme plate de construction.

**17.** Support élastique à rotule selon la revendication 14, caractérisé en ce que le gaz compressible occupant pour partie la capacité des enveloppes étanches (60, 60a) dudit coussin (61) est confiné dans au moins une sphère creuse et étanche (70) dont la paroi élastique présente une géométrie variable en fonction de la pression dudit liquide qui l'entoure.

**18.** Support élastique à rotule selon l'une des revendications 4 à 7, caractérisé en ce que chacune desdites enveloppes (60, 60a) constituant lesdits coussins (61) est équipée, sur ses deux faces (65, 65a) en contact avec les enveloppes qui lui sont contiguës ou avec lesdits plateaux mobiles, d'une plaque d'appui en élastomère (66) comportant des parties en saillie (67) et des parties concaves (68), lesdites parties concaves ménageant des espaces nécessaires au libre étalement des parties en saillie qui s'écrasent sous l'effet d'un accroissement de la charge portée par ledit support élastique.

**19.** Support élastique à rotule selon l'une des revendications 4 à 14, caractérisé en ce qu'un desdits plateaux (91) comporte des moyens de suspension et de manutention d'une colonne montante (94) de forage du sous-sol sous-marin ou de transfert de la production de pétrole vers la surface de la mer et en ce que l'autre plateau (88) possède des moyens de fixation au pont d'une installation flottante (89) de forage ou de production à partir de laquelle ladite colonne, composée d'une pluralité de tronçons (93 à 93d) est suspendue et manutentionnée par adjonction ou retrait de tronçons successifs de cette colonne.

**20.** Support élastique à rotule annulaire selon l'une des revendications 4 à 14, caractérisé en ce qu'un desdits plateaux (101) possède des moyens de retenue d'une colonne montante (104) de forage du sous-sol sous-marin, ou de transfert de la production de pétrole vers la surface de la mer, qui est mise en tension à partir d'une installation flottante, en ce que l'autre plateau (101a) possède des moyens de fixation à une embase (104a) fixée au fond de la mer et reliée à un gisement pétrolier, et en ce que la rotule de centrage (106) possède des moyens d'étanchéité (107) permettant le confinement d'un fluide sous pression transitant entre ladite colonne montante et ledit gisement pétrolier.

**21.** Support élastique à rotule selon l'une des revendications 2 à 14, caractérisé en ce qu'un des plateaux (117) dudit support constitue la base inférieure d'une colonne oscillante mono-articulée (112) d'amarrage d'un navire en mer, ou la base inférieure d'un tronçon (123) d'une colonne multi-articulée (122), et l'autre plateau (119) constitue une embase d'ancrage (115) de ladite colonne fixée sur le sol sous-marin, ou la base supérieure d'un tronçon (124) de colonne oscillante multi-articulée (122).

**Claims**

**1.** Flexible, self aligning support comprising two flat surfaces, these being mobile relative to each other and connected together by at least one self aligning device, a load being transferred between the said flat surfaces (1, 3), on the one hand, by means of at least one cushion (5) comprising at least one impermeable envelope (6) containing at least one fluid which is subjected to pressure by the action of the said load and, on the other hand, by at least one self aligning device (8) for centring the said flat surfaces relative to each other, the said self aligning device permitting a restricted degree of mobility between the two flat surfaces relative to each other, these flat surfaces being able to approach each other or move apart and simultaneously the axis of one of the flat surfaces may describe a movement of nutation relative to the centre of the spherical coupling of the said self aligning device.

**2.** Flexible self aligning support in accordance with claim 1, characterised in that each of the said cushions (5) comprises a superimposition of impermeable envelopes (6 to 6b) of substantially circular contour, the peripheral edges taking, when subjected to the effects of the fluid pressure which they contain, a form which is basically toroidal and in that the said self aligning device or devices (8) for centring the said flat surfaces (1, 3) relative to each other are arranged about the said envelopes and co-axial to them.

3. Flexible self aligning support in accordance with claim 1, characterised in that each of the said cushions (20) comprises at least one annular envelope (23).

4. Flexible self aligning support in accordance with claim 1, characterised in that each of the said cushions (20) comprises a superimposition of annular envelopes (23 to 23f), the inner (24) and outer (25) edges taking, when subjected to the effects of the fluid pressure which they contain, a basically toric or toroidal form and in that the self aligning device or devices (27) used for centring the said flat surfaces (21, 22) relative to each other, on the one hand, are arranged within the said envelopes and concentric to the self aligning device and, on the other hand, include, at their centre, a cylindrical orifice (29) such that the said support has an annular form surrounding the said central orifice.

5. Flexible self aligning support in accordance with claim 1, characterised in that a number of cushions (37 to 37d), each comprising a superimposition of impermeable envelopes, are arranged side by side on a circle which is concentric to the self aligning device or devices (43) used for centring the said flat surfaces and connected together by at least one system of piping (40) capable of being closed by a system of valves (41) so that the volumes of fluid (39 to 39d) contained in all or part of the said multiple cushions may be either in intercommunication or temporarily isolated from each other.

6. Flexible self aligning support in accordance with one of claims 1 to 5, characterised in that at least one intermediate flat surface (45) is positioned between the two principal flat surfaces (46, 47) of the said support and separated from each of these by at least one of the said cushions (49) and in that the said intermediate flat surface is maintained central relative to at least one of the two principal flat surfaces (47) by means of at least one self aligning device (50).

7. Flexible self aligning support in accordance with one of claims 1 to 5, characterised in that the self aligning device or devices (8) used for centring the said flat surfaces (1,3) relative to each other is or are constructed by the association of a circular section (9) integral with one of the two flat surfaces and having a cylindrical bore (10), with a spherical coupling (11) integral with the other flat surface and capable of sliding and pivoting within the said bore.

8. Flexible self aligning support in accordance with one of claims 4 to 7, characterised in that each of the said envelopes (23 to 23f) comprising the said fluid cushions (20) is manufactured from at least one layer of cables arranged basically radially and fitting inside a sheet of flexible and impermeable material to which the said cables adhere and in that each of the said envelopes is joined to another envelope forming part of the said cushions to which it is adjacent, by means of at least one annular membrane (30) made from a rigid material and to which the said envelopes are fixed by bonding, each of the said annular membranes situated at one end of the said cushion possessing a sealed means of fixing to the said principal (21, 22) and intermediate (45) flat surfaces of the said flexible support.

9. Flexible self aligning support in accordance with claim 8, characterised in that the said annular membranes (30) are pierced by at least one intercommunicating orifice (31) between the volumes of the different envelopes (23 to 23f) forming part of the same cushion (20).

10. Flexible self aligning support in accordance with claim 8, characterised in that the said annular membranes (30, 79 to 79c), made from a rigid material, which separate the envelopes of the said cushions have the form of a flat disc or truncated circular section, spherical or toric.

11. Flexible self aligning support in accordance with claim 8, characterised in that the said annular envelopes (71) and the said annular membranes (72) comprising the said cushions have the form of an open ring which forms a temporary passage (73) between the central orifice (74) which they encircle and the exterior surface, the continuity of the said membranes being ensured by removable plates (76) which secure the said passage.

12. Flexible self aligning support in accordance with one of claims 1 to 6, characterised in that the fluid contained in the impermeable envelopes of the said cushions is a liquid which is basically incompressible.

**13.** Flexible self aligning support in accordance with one of claims 1 to 6, characterised in that the fluid contained in the impermeable envelopes of the said cushion is, at least in part, a substance which is capable of being deformed up to the limiting solid state and having a certain degree of compressibility, such as a silicone gel.

**14.** Flexible self aligning support in accordance with one of claims 1 to 6, characterised in that the fluid contained in the impermeable envelopes of the said cushions is a mixture, in suitable proportions, of a liquid which is basically incompressible and a gas which is compressible, the compression permitting the said two flat surfaces of the said support to approach each other and absorb the energy resulting from the deposition of a load.

**15.** Flexible self aligning support in accordance with claim 14, characterised in that a system of piping (19) connects the volume of liquid contained in the impermeable envelopes (6 to 6b) of each of the said cushions (5) to at least one associated bottle or pneumatic accumulator (16) containing a compressible gas adjusted, before use, to a level of pressure constituting an initial calibrated load setting.

**16.** Flexible self aligning support in accordance with claim 14, characterised in that the compressible gas partly occupying the volume (16) of the impermeable envelopes (23 to 23f) of the said cushions or an associated volume (32) communicating with the said volume of the envelopes, is contained in at least one flexible sleeve, this being impermeable and capable of being deflated (36) which isolates it from the liquid occupying the other part of this volume, the said gas being adjusted, before use, to a set calibration pressure producing the inflation of the said sleeve until the pressure of the said liquid exceeds the said set calibration pressure, the said sleeve tending to regain its flat constructional form.

**17.** Flexible self aligning support in accordance with claim 14, characterised in that the compressible gas partly occupying the volume of the impermeable envelopes (60, 60a) of the said cushion (61) is contained in at least one hollow and impermeable sphere (70), the flexible wall having a geometry which is variable in accordance with the pressure of the said liquid surrounding it.

**18.** Flexible self aligning support in accordance with one of claims 4 to 7, characterised in that each of the said envelopes (60, 60a) constituting the said cushions (61) is equipped, on its two faces (65, 65a) in contact with the envelopes adjacent to it or with the said mobile flat surfaces, with a supporting plate made from an elastomer (66), this comprising projecting parts (67) and concave parts (68), the said concave parts forming spaces which are necessary for an unrestricted spread of the projecting parts which are pressed down under the effects of an increase in the load carried by the said flexible support.

**19.** Flexible self aligning support in accordance with one of claims 4 to 14, characterised in that one of the said flat surfaces (91) comprises a means of suspension and handling of the riser (94) for an underground or underwater borehole or for transferring oil production products to the surface of the sea and in that the other flat surface (88) possesses a means of fixing to the deck of a floating installation (89) used for drilling or production, from the said riser, comprising a number of lengths (93 to 93d) suspended and handled by the addition or removal of successive lengths of this riser.

**20.** Flexible self aligning support in accordance with one of claims 4 to 14, characterised in that one of the said flat surfaces (101) possesses a means of retaining a riser (104) used for underground or underwater drilling or for transferring oil production products to the surface of the sea, this being tensioned from a floating installation, in that the other flat surface (101a) possesses a means of fixing to a base (104a) fixed to the sea bed and connected to a petroleum deposit and in that the self aligning device used for centring (106) possesses a means of sealing (107) permitting the confinement of a fluid under pressure conveyed between the said riser and the said petroleum deposit.

**21.** Flexible self aligning support in accordance with one of claims 2 to 14, characterised in that one of the flat surfaces (117) of the said support constitutes the lower base of an oscillating mono-articulated column (112) used to moor a vessel at sea, or the lower base of a section (123) of a multi-articulated column (122) and the other flat surface (119) constitutes a base (115) for anchoring the said column fixed to the sea bed or the upper base of a length (124) of an oscillating multi-articulated column (122).

**Patentansprüche**

1. Elastische (Kugel)gelenkstütze, zusammengesetzt aus zwei Platten, die bezüglich einander beweglich und miteinander über wenigstens ein (Kugel)gelenk verbunden sind, wobei die Überführung einer Last zwischen diesen Platten (1, 3) einesteils vermittels eines Kissens (5) realisiert wird, das aus wenigstens einer dichten Hülle (6) besteht, die wenigstens ein Fluid einschließt, das durch die Wirkung dieser Last druckbeaufschlagt wird und anderenteils durch wenigstens ein (Kugel)zentriergelenk (8) dieser Platten bezüglich einander realisiert wird, wobei dieses (Kugel)gelenk es ermöglicht, eine beschränkte Mobilität der beiden Platten bezüglich einander herbeizuführen und wobei diese Platten sich bezüglich einander annähern und entfernen können und gleichzeitig die Achse einer der Platten eine Taumelbewegung bezüglich der Mitte der kugelförmigen Nuß dieses (Kugel)gelenks beschreiben kann.

2. Elastische (Kugel)gelenkstütze nach Anspruch 1, dadurch **gekennzeichnet,** daß jedes dieser Kissen (5) zusammengesetzt wird durch eine Überlagerung dichter Hüllen (6 bis 6b) von einer im wesentlichen kreisförmigen Kontur, deren Umfangrand Teile unter dem Einfluß der Unterdrucksetzung des Fluids, das sie begrenzen, eine im wesentlichen toroidförmige Gestalt einnehmen und daß das oder die (Kugel)gelenke (8) zur Zentrierung dieser Platten oder Scheiben (1, 3) bezüglich einander um diese Hüllen koaxial zu diesen angeordnet sind.

3. Elastische (Kugel)gelenkstütze nach Anspruch 1, dadurch **gekennzeichnet,** daß jedes dieser Kissen (20) zusammengesetzt ist aus wenigstens einer Ringhülle (23).

4. Elastische (Kugel)gelenkstütze nach Anspruch 1, dadurch **gekennzeichnet,** daß jedes dieser Kissen (20) zusammengesetzt ist aus einer Überlagerung von Ringhüllen (23 bis 23f), deren Innen- und Außenrandteile (24; 25) unter dem Einfluß der Unterdrucksetzung des Fluids, das sie begrenzen, eine im wesentlichen torische oder toroidförmige Gestalt annehmen und daß das oder diese (Kugel)gelenke zur Zentrierung (27) dieser Platten (21, 22) bezüglich einander einesteils im Innern dieser Hüllen und konzentrisch zu dieser angeordnet sind und anderenteils in ihrer Mitte eine zylindrische Öffnung (29) derart umfassen, daß diese Stütze eine diese mittige Öffnung umschließende Ringform aufweist.

5. Elastische (Kugel)gelenkstütze nach Anspruch 1, dadurch **gekennzeichnet,** daß eine Vielzahl von Kissen (37 bis 37d), von denen ein jedes durch eine Überlagerung dichter Hüllen zusammengesetzt ist, seitlich nebeneinander auf einem konzentrischen Kreis zu der oder den (Kugel)gelenkstützen zur Zentrierung (43) dieser Platten angeordnet und untereinander über wenigstens einen Kanal (40) verbindbar sind, der durch Ventil- oder Schieberbetätigungsmittel (41) derart verschließbar ist, daß die Fluidspeicher (39 bis 39d), die ganz oder zum Teil durch diese Mehrfachkissen begrenzt sind, entweder in gegenseitiger Verbindung oder zeitweise isoliert zueinander sein können.

6. Elastische (Kugel)gelenkstütze nach einem der Ansprüche 1 bis 5, dadurch **gekennzeichnet,** daß wenigstens eine Zwischenplatte (45) zwischen diese beiden Hauptplatten (46, 47) dieser Stütze zwischengesetzt und je von diesen über wenigstens eines dieser Kissen (49) getrennt ist und daß diese Zwischenscheibe zentriert bezüglich wenigstens einer der Hauptscheiben (47) vermittels wenigstens einer (Kugel)gelenkstütze (50) ist.

7. Elastische (Kugel)gelenkstütze nach einem der Ansprüche 1 bis 5, dadurch **gekennzeichnet,** daß das oder die (Kugel)gelenke zur Zentrierung (8) dieser Platten (1, 3) bezüglich einander realisiert ist oder sind durch die Zuordnung eines fest mit einer der beiden Scheiben ausgebildeten Rings (9), der eine zylindrische Bohrung (10) trägt, zu einer kugelförmigen Nuß (11), die fest mit der anderen Scheibe ist und im Innern dieser Bohrung gleiten und verschwenken kann.

8. Elastische (Kugel)gelenkstütze nach einem der Ansprüche 4 bis 7, dadurch **gekennzeichnet,** daß jede dieser die vorgenannten Fluidkissen (20) bildenden Hüllen (23 bis 23f) ausgehend aus wenigstens einer Bahn von Kabeln hergestellt ist, die im wesentlichen radial angeordnet und in einer Folie aus einem nachgiebigen und dichten Material, an dem diese Kabel haften, eingebettet oder eingegossen sind und daß jede dieser Hüllen mit einer anderen Hülle dieser Kissen, die ihr angrenzend ist, vermittels wenigstens einer Ringmembran (30) aus einem steifen Material verbunden ist, an der diese Hüllen durch Verkleben fixiert sind, wobei jede dieser Ringmembranen, die an einem Ende dieses Kissens angeordnet sind, Mittel zur dichten Befestigung an diesen Hauptplatten (21, 22) und Zwischenplatten (45) dieser elastischen Stütze besitzen.

9. Elastische (Kugel)gelenkstütze nach Anspruch 8, dadurch **gekennzeichnet,** daß diese Ringmembranen (30) von wenigstens einer Kommunikationsöffnung (31) zwischen den Speichern der verschiedenen Hüllen (23 bis 23f) ein und des gleichen Kissens (20) durchbohrt sind.

10. Elastische (Kugel)gelenkstütze nach Anspruch 8, dadurch **gekennzeichnet,** daß diese Ringmembranen aus steifem Material (30, 79 bis 79c), welche diese Hüllen dieser Kissen trennen, eine Form einer flachen Ringscheibe oder eines konischen, kugeligen oder torischen Reigscheibe haben.

11. Elastische (Kugel)gelenkstütze nach Anspruch 8, dadurch **gekennzeichnet,** daß diese Ringhüllen (71) und diese kissenbildenden Ringmembranen (72) eine Form eines offenen Rings haben, der einen zeitweiligen Durchlaß (73) zwischen der mittigen Öffnung (74), die sie umschließen und außen belassen, wobei die Kontinuität dieser Membranen sichergestellt ist durch demontierbare Laschen (76), die diesen Durchlaß verriegeln.

12. Elastische (Kugel)gelenkstütze nach einem der Ansprüche 1 bis 6, dadurch **gekennzeichnet,** daß das durch diese dichten Hüllen dieser Kissen begrenzte Fluid eine im wesentlichen inkompressible Flüssigkeit ist.

13. Elastische (Kugel)gelenkstütze nach einem der Ansprüche 1 bis 6, dadurch **gekennzeichnet,** daß das durch die dichten Hüllen dieses Kissens begrenzte Fluid wenigstens zum Teil eine an der Grenze zum festen Zustand verformbare Substanz ist, die eine gewisse Kompressiblität hat wie beispielsweise ein Silikongel.

14. Elastische (Kugel)gelenkstütze nach einem der Ansprüche 1 bis 6, dadurch **gekennzeichnet,** daß das durch die dichten Hüllen dieser Kissen begrenzte Fluid ein Gemisch in geeigneten Anteilen einer im wesentlichen inkompressiblen Flüssigkeit und eines kompressiblen Gases ist, dessen Kompression die Annäherung der beiden genannten Platten dieses Trägers und die Absorption der durch Abscheiden einer Ladung zugeführten Energie ist.

15. Elastische (Kugel)gelenkstütze nach Anspruch 14, dadurch **gekennzeichnet,** daß ein Kanal (19) den Speicher für die in den dichten Hüllen (6 bis 6b) jedes dieser Kissen (5) enthaltenen Flüssigkeit mit wenigstens einer verbundenen Flasche oder einem pneumatischen Sammler (16) verbindet, der ein kompressibles Gas enthält, das vor der Benützung auf ein eine Anfangstarierung bildendes Druckniveau gebracht ist.

16. Elastische (Kugel)gelenkstütze nach Anspruch 14, dadurch **gekennzeichnet,** daß das kompressible zum Teil den Speicher (16) der dichten Hüllen (23 bis 23f) der genannten Kissen oder einen verbundenen Speicher (32) einnehmendes kompressibles Gas mit diesem Speicher der Hüllen in Verbindung steht und in wenigstens einer nachgiebigen abflachbaren und dichten Manschette (36) eingeschlossen ist, welche es von der den anderen Teil dieses Speichers einnehmenden Flüssigkeit isoliert, wobei das Gas vor der Verwendung auf einen Tarierungsdruck gebracht ist, der das Aufblähen dieser Manschette hervorruft, bis der Druck dieser Flüssigkeit größer als dieser Tarierungsdruck geworden ist, wobei diese Manschette dazu neigt, ihre flache Konstruktionsform wieder anzunehmen.

17. Elastische (Kugel)gelenkstütze nach Anspruch 14, dadurch **gekennzeichnet,** daß das zum Teil den Speicher der dichten Hüllen (60, 60a) dieses Kissens (61) einnehmende kompressible Gas begrenzt ist in wenigstens einer hohlen und dichten Kugel (70), deren elastische Wandung eine Geometrie annimmt, die variabel als Funktion des Drucks dieser sie umgebenden Flüssigkeit ist.

18. Elastische (Kugel)gelenkstütze nach einem der Ansprüche 4 bis 7, dadurch **gekennzeichnet,** daß jede der Hüllen (60, 60a), die diese Kissen bildet, auf ihren beiden Flächen (65, 65a) in Kontakt mit den Hüllen die ihr benachbart sind oder mit diesen beweglichen Platten mit einer Stützplatte aus Elastomer (66) ausgestattet ist, welche vorspringende Teile (67) sowie konkave Teile (68) umfassen, wobei diese konkaven Teile Räume aussparen, die für die freie Ausdehnung der vorstehenden Teile notwendig sind, welche unter dem Einfluß eines Ansteigens der von dieser elastischen Stütze getragenen Last zusammengequetscht werden.

19. Elastische (Kugel)gelenkstütze nach einem der Ansprüche 4 bis 14, dadurch **gekennzeichnet,** daß jede der Platten (91) Mittel zum Aufhängen und Handhaben einer Bohrsteigkolonne (94) für das Untergrundbohren unter Wasser oder zum Überführen der Erdölproduktion gegen die Meeresoberfläche umfaßt und daß die andere Scheibe (88) Mittel zur Befestigung an der Brücke einer schwimmenden Bohr- oder Produktionsinstallation (89) besitzt, von der diese Kolonne, die aus einer Vielzahl von Abschnitten (93 bis 93d) zusammengesetzt ist, abgehängt und durch Abnahme oder Hinzufügen zusätzlicher Abschnitte dieser Kolonne gehandhabt wird.

20. Elastische (Kugel)gelenkstütze nach einem der Ansprüche 4 bis 14, dadurch **gekennzeichnet,** daß eine dieser Platten (101) Mittel zum Halten einer Steigbohrkolonne (104) für das unterirdische Unterwasserbohren oder zur Überführung der Erdölproduktion gegen die Meeresoberfläche aufweist, die ausgehend von einer schwimmenden Installation unter Spannung gesetzt wird, und daß die andere Platte (101a) Mittel zur Befestigung an einer Grundkonstruktion (104a) aufweist, die am Meeresboden befestigt und mit einer Erdölproduktionsquelle verbunden ist und daß die (Kugel)gelenkstütze zur Zentrierung (106) Dichtigkeitsmittel (107) aufweist, welche die Eingrenzung eines Fluids unter Druck ermöglicht, welches zwischen dieser Bohrsteigkolonne und dieser Erdölproduktionsbohrung transportiert wird.

21. Elastische (Kugel)gelenkstütze nach einem der Ansprüche 2 bis 14, dadurch **gekennzeichnet,** daß eine der Platten (117) dieses Trägers die untere Basis einer einzeln gelenkigen (112) schwingenden Andockkolonne an ein Schiff im Meer oder die untere Basis eines Abschnitts (123) einer mehrfach gelenkigen Kolonne (122) aufweist und die andere Platte (119) eine Verankerungsgrundkonstruktion (115) dieser Kolonne darstellt, die am Unterwasserboden oder der oberen Basis eines Abschnitts (124) einer mehrfach gelenkigen Schwingkolonne (122) befestigt ist.

**FIG.1**

**FIG.6**

FIG.2

FIG.2A

## FIG.3

FIG.4

FIG.5

FIG.9

FIG.7

**FIG.8**

# FIG.10

## FIG.11

**FIG.12**

## FIG.13

## FIG.14